# EUROPEAN PATENT SPECIFICATION

(11) **EP 2 618 233 B1**
(45) Date of publication and mention of the grant of the patent: **06.08.2014**
(21) Application number: 13151704.7
(22) Date of filing: 17.01.2013
(51) Int. Cl.: G05D 23/19, G06F 3/041, F24F 11/00

(54) **Programmable thermostat with mechanical sliders on touch-sensitive surface**
Programmierbarer Thermostat mit mechanischen Schiebern auf einer berührungsempfindlichen Oberfläche
Thermostat programmable avec des curseurs mécaniques sur une surface tactile

(30) Priority: 17.01.2012 IT TO20120031
(43) Date of publication of application: 24.07.2013
(73) Proprietor: Finder S.P.A., 10040 Almese (TO) (IT)
(72) Inventor: Di Palo, Fabio, 10040 Almese (TO) (IT)
(74) Representative: Robba, Pierpaolo

(56) References cited:
- EP-A1- 2 187 290
- GB-A- 2 441 221
- US-A1- 2004 260 411
- US-A1- 2007 241 203

## Description

### Technical field

The present invention generally relates to a programmable thermostat or chronothermostat and more particularly to a touch-sensitive or pressure-sensitive control interface for a programmable thermostat.

### Prior Art

Programmable thermostats for adjusting the temperature in a place, which use a plurality of adjustment sliders through which the temperature desired for a place in a given time interval is controlled and programmed, are known in the art.

Such movable sliders allow an easy use also by non-skilled users, and they directly interact with rheostats or potentiometers through which the slider position is controlled, thereby defining the desired temperature.

GB2441221 discloses a control interface for a programmable thermostat comprising a clock face interface screen graphic with a movable slider.

EP2187290 discloses an input device for a programmable thermostat with a multi-touch sensing display and a mechanic slider.

US2007241203 discloses a user interface for a programmable thermostat including a plurality of user input devices, such as buttons, a heating/cooling mode slider, and a fan mode slider, wherein these user input devices are used to set the operating state of a system either manually or by selecting the desired programming mode.

Another kind of known digital thermostats, an example of which is disclosed in US 2004/260411, uses a touch screen for inputting the temperature adjustment data through a direct interaction with the screen, without use of sliders.

Input systems are further known for interacting with apparatuses, such as cellular phones, smart phones, tablets, through touch-sensitive panels or touch panels, also referred to as "touch screens", in case they act as screens, or "touch films", in case they are made of films that can be applied for instance on a screen or another support.

An example of such "touch panel" systems is disclosed in EP0435438.

In general, the Applicant has realised that the prior art concerning thermostats with movable sliders interacting with rheostats or potentiometers has the disadvantage that their reliability decreases in time, since they are to operate in an environment where dust or humidity are present, and in general in non-controlled ambient conditions.

As to the sensors controlled through touch screens, in case it is desired to display an image of the slider-based interface on the screen, such sensors have the drawback that they cannot reproduce the sliders of the conventional thermostats within the limited size of a thermostat screen, whereby the advantage of maintaining an interface usual for the user is lost.

### Description of the invention

The technical problem the present invention aims at solving is to provide a control interface for a programmable thermostat, which is reliable and robust, even if used in a hostile environment, exposed to humidity or to dust and dirt.

According to the invention, the above and other objects are achieved by means of a touch-sensitive control interface for a programmable thermostat having the features set forth in the appended claims.

The present invention further concerns a programmable thermostat having a touch-sensitive control interface.

The claims are integral part of the technical teaching provided herein in respect of the invention.

### Brief Description of the Figures

The above and other features and advantages of the present invention will become apparent from the following description of preferred embodiments made by way of non limiting example with reference to the accompanying drawings, in which elements denoted by a same or similar numerical reference correspond to components having the same or similar function and construction, and in which:
- Fig. 1 shows an overall view of a programmable thermostat according to the invention;
- Fig. 2 shows a resistive control interface of a programmable thermostat according to the invention;
- Fig. 2A shows a capacitive control interface of a programmable thermostat according to the invention;
- Fig. 2B shows a second embodiment of a capacitive control interface of a programmable thermostat according to the invention; and
- Fig. 3 shows a detail of an adjustment slider of a programmable thermostat according to the invention.

### Detailed Description of Preferred Embodiments

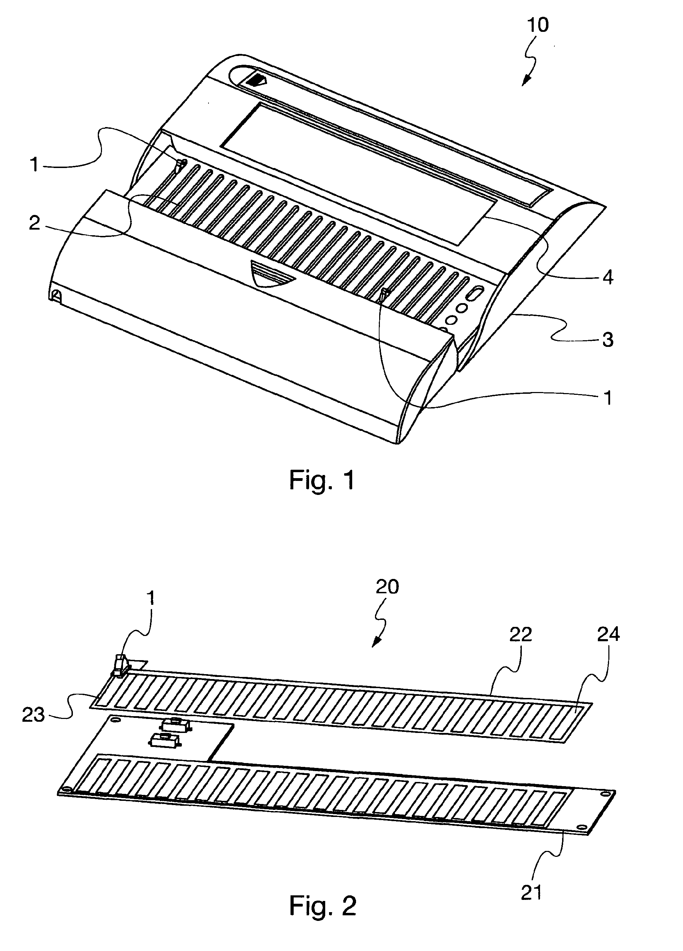

Referring to Fig. 1, the programmable thermostat or chronothermostat 10 according to the invention comprises a plurality of adjustment sliders, in particular a plurality of temperature adjustment sliders 1, which are mounted so as to be guided by guide means 2 in such a manner that they slide on said guide means or guide 2, a cover 3 and a screen or display 4, on which information about the operation and/or the adjustment of a heating or conditioning system connected to said thermostat is displayed.

Adjustment slider 1 is movable and its movement is guided by guide 2. Preferably, the movement of slider 1 is guided in a substantially rectilinear direction. The guide may be made for instance by cutting a through groove in cover 3, in which slider 1 is made to slide. Preferably, the device includes a plurality of guides 2 substantially parallel to one another.

The device according to the invention may be used for adjusting the temperature or another operation parameter of the system the thermostat is associated with.

Screen 4 may be a touch screen, with areas intended to act as keys. The thermostat may include physical keys, not shown in the drawing, for setting or adjusting some control parameters of the system, for instance hour and date.

Control interface 20 according to the invention includes a printed circuit 21, to which a panel 22 made of a touch-sensitive material ("touch panel"), of either resistive or capacitive kind, is connected. Both panel kinds are known in the art.

Panel 22 may be associated for instance by means of an adhesive or glued so that a surface thereof adheres to printed circuit 21, or it may be secured by means of other methods known in the art, whereas the opposite surface 24 is in contact with adjustment slider 1.

Optionally, the touch-sensitive portion may consist of a "touch film" associated by means of known methods, for instance glued by means of an adhesive, with a rigid support so as to form touch-sensitive panel 22.

Preferably, panel 22 has a flat surface. Preferably, the surface of panel 22 is smooth and it has neither projections nor rough areas. Preferably surface 24 for contact with slider 1 is smooth.

Slider 1 is guided by guide 2 in a contact position of panel 22, preferably so that it slides parallel to contact surface 24 of panel 22.

Slider 1 is kept in contact with panel 22 by guide 2, in such a manner that it contacts a panel surface, for instance top surface 24. Preferably, slider 1 is guided by guide 2 so that it slides on contact surface 24 of panel 22 and is kept in contact with surface 24 substantially over the whole of its path.

Touch-sensitive panel 22 detects in known manner, through a microcontroller, the contact position of slider 1 on contact surface 24.

The microcontroller associates the value of an adjustment or control parameter of the thermostat, for instance the temperature, with the position of slider 1, in particular with the coordinates thereof, in order to adjust said parameter as a function of the cursor position.

In correspondence with the positions taken by slider 1 when it is positioned at the end points of its path, the microcontroller associates the maximum and minimum values of the parameter to be adjusted, for instance the values of the maximum and minimum temperatures between which temperature adjustment in a place is to be carried out.

The value of the parameter to be adjusted, associated with the position of slider 1, is displayed for instance on screen 4, so as to allow the user to check the set value and to modify it.

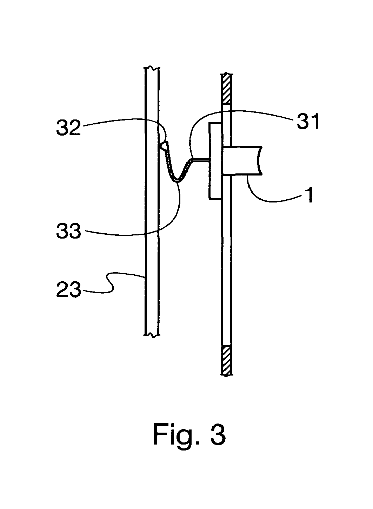

Fig. 3 shows a detail of an embodiment of slider 1 in its portion in contact with panel 22.

Preferably, slider 1 includes a pointer 31, which forms the end portion of slider 1 placed in contact with panel 22 and which is kept in contact with panel 22 with a constant pressure due to the action of resilient means 33, for instance a spring. Preferably, said resilient means 33 keep pointer 31 in contact with contact surface 24 of panel 22 so as to make pointer 31 slide parallel to panel 22, preferably so as to make pointer 31 slide on contact surface 24 substantially over the whole of its path.

Preferably, said resilient means 33 exert a force in the range 0.5 to 3 N on pointer 31.

More preferably, said resilient means 33 exert a force in the range 1 to 1.5 N on pointer 31.

Slider 1 may be manufactured by moulding a plastic or polymeric material and it is suitably shaped, for instance with a "U" shape, so as to act as a spring 33.

Preferably, said resilient means 33 are formed by pointer 31.

Preferably, pointer 31 exerts a force in the range 0.5 to 3 N on contact surface 24 of panel 22.

More preferably, pointer 31 exerts a force in the range 1 to 1.5 N on contact surface 24 of panel 22.

Alternative embodiments are possible: for instance pointer 31 may be made of a metallic material and may be suitably connected to slider 31 by known means, for instance welded or glued.

Also slider 1 may be made of known plastic material or metal.

Preferably, pointer 31 has a tip 32, arranged to contact panel 22, which is made of materials and with a shape and surface finish allowing an optimal operation of panel 22 when the tip is pressed on the panel.

Preferably, tip 32 has a hemispherical shape.

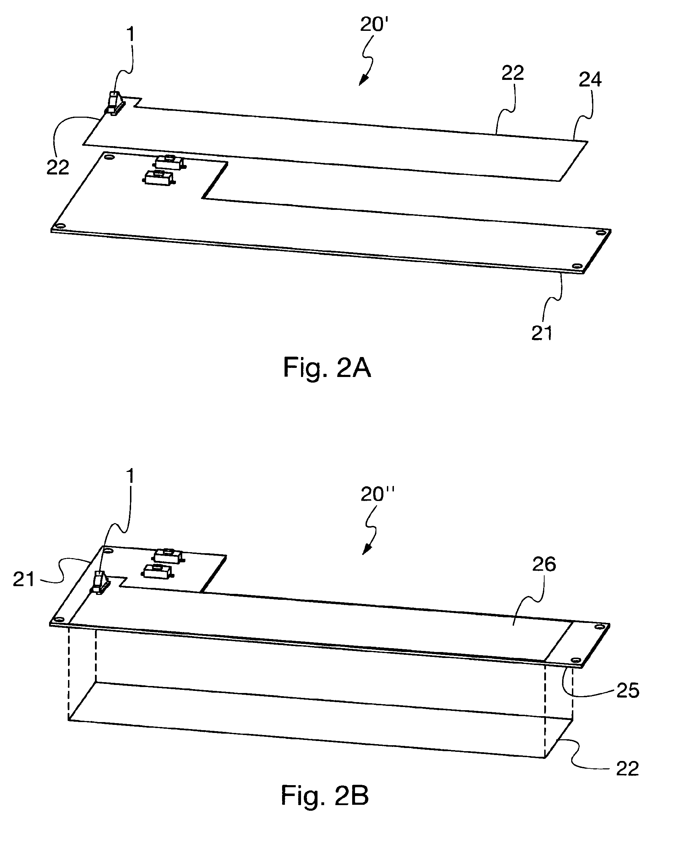

Fig. 2 shows a first embodiment of the invention, in which panel 22 is made of a resistive touch-sensitive (touch) material.

Said panel is made of a conductive film and a conductive substrate, which are superimposed and are separated for instance by spacers. By applying a pressure on a point of the film, the conducting layers of the film and the substrate are brought into electrical contact and thus it is possible to measure the position of the point where the pressure has been exerted.

Usually, resistive panels do not allow detecting the position if they are touched at multiple points at the same time, so that, if a plurality of adjustment sliders 1 are provided, a plurality of contact pads 23 are to be made on panel 22, each pad being associated with a given slider 1 in order to detect the position thereof.

Contact pads 23 cannot be obtained from a single touch-sensitive (touch) sheet, but they are to be made in such a way that each pad 23 is independent from the other ones and is obtained from a single resistive sheet or membrane.

Slider 1 is kept in contact with contact pad 23 by guide 2 so as to contact a surface of the pad, for instance top surface 24. Preferably, slider 1 is guided by guide 2 so that it slides on contact surface 24 of pad 23 and is kept in contact with surface 24 substantially over the whole of its path.

Preferably, pointer 31 exerts a force in the range 0.5 to 3 N on contact surface 24 of pad 23. More preferably, pointer 31 exerts a force in the range 1 to 1.5 N on contact surface 24 of pad 23.

For the sake of easiness of assembly, pads 23 may be joined to form a single panel by using a non-touch-sensitive connecting material, as shown in Fig. 2.

A contact pad 23 may be 1 to 10 mm wide and 10 to 100 mm long.

Advantageously, the control interface according to the first embodiment of the invention, where the panel is made of a resistive touch-sensitive (touch) material, allows manufacturing a panel that is less expensive with respect to other solutions, for instance the solutions using a capacitive panel. Moreover, the control interface made of a resistive touch-sensitive panel (touch panel) is less sensitive to dirt, thereby allowing a good operation in hostile environment conditions.

In a second embodiment, shown in Fig. 2A, panel 22 is made of a material comprising capacitive touch-sensitive (touch) sensors. In order to detect the position of pointer 31 by means of a capacitive transducer, said slider 1 has to be made of a material capable of modifying the capacitance of capacitive panel 22, in particular of the sensors in the panel. For instance, the slider may be made of plastics charged with a metal in order to be made conductive. Preferably, only pointer 31 is made of a material capable of being detected by the capacitive sensors in panel 22.

Preferably, only tip 32 of the pointer is made of a material capable of being detected by the capacitive sensors in panel 22.

In the second embodiment, where the capacitive touch-sensitive or "cap-sense" panel is used, panel 22 may be an integral panel and the contact points of slider 1 are determined by means of a software programme interpreting the signals sent by the touch sensors, detecting the contact positions and associating each slider 1 with the value of its position and consequently of the parameter to be adjusted.

Use of capacitive touch sensors allows making a single panel 22, which is simultaneously contacted by all sliders, in the alternative to the plurality of pads 23 shown in Fig. 2.

Actually, capacitive touch sensors allow detecting the so-called "multi-touch", that is, they are capable or reading multiple signals at the same time, and hence of detecting the positions of multiple sliders at the same time.

Preferably, control interface 20 may be made by means of a capacitive touch screen or cap-sense panel 22, or in the alternative a single touch-sensitive panel of the touch screen type may be used for making panel 22 and screen 4.

In an embodiment of the invention using a capacitive touch-sensitive panel 22, shown in Fig. 2B, it is possible to mount panel 22 under printed circuit 21, against printed circuit surface 25 opposite the surface turned towards slider 1. Actually, in this case too the capacitive touch panel is capable of detecting the position of slider 1, which in this embodiment is to be placed in contact with printed circuit 21, in particular in contact with top surface 26 thereof.

The operation of the system described above is as follows.

In the programmable thermostat according to the invention, each slider is arranged to adjust a parameter, such as the temperature, in a predetermined time interval, e.g. 1 hour. In case it is desired to adjust the temperature for each hour in a day, the thermostat interface is to be provided with twenty-four sliders, each one placed in contact with panel 22 and intended to adjust the temperature for a given hour.

By setting the temperatures for each hour, the temperature curve is defined in the space of the whole day and such curve is stored by the microprocessor into a memory associated with the thermostat.

The two end values of the range between which the temperature can be adjusted are defined by the two end positions of the stroke of slider 1.

The temperature corresponding to the position of slider 1 is detected in known manner by panel 22, in particular it is detected by the portion of panel 22 placed in contact with slider 1, and it is displayed on screen 4, so as to allow the user to adjust it at will.

The user makes slider 1 slide along guide 2, as long as the position corresponding to the desired temperature is reached.

Once the temperature desired for each hour has been set by positioning all sliders 1, the daily temperature curve is built and is stored into the thermostat memory in known manner.

Two modalities of blocking the thermostat are moreover provided, in order to protect the set data.

The first modality protects against accidental modifications, which might be caused by unwanted touches on the touch display or on the existing adjustment keys, if any. In this case the display is blocked but it is still possible to carry out adjustments by means of sliders.

In the second modality, the modifications to the set parameters are completely blocked: the thermostat stores the set curve and executes the automatic cycle by using those settings,

The blocking function is activated during a setup phase, during which a PIN is entered, and inputting again the PIN is necessary in order to unblock the system.

Different operation parameters may be stored and adjusted similarly to the temperature.

Of course, while leaving the principle of the invention unchanged, the embodiments and the construction details can be widely changed with respect to what has been described and shown by way of non limiting example only, without thereby departing from the scope of the invention as defined in the following claims.

## Claims

1. Control interface (20) for a programmable thermostat (10), comprising:
- a panel (22) made of a touch-sensitive material;
**characterized in that** said control interface (20) comprises a plurality of movable adjustment sliders (1), guide means (2) for said sliders (1), and **in that** said panel (22) comprises a plurality of contact pads (23) made of resistive touch-sensitive material, each pad (23) having a contact surface (24, 26) in contact with a corresponding slider (1), each pad (23) being independent from the other pads (23) and being formed from a single resistive sheet or membrane, said guide means (2) being arranged to guide said plurality of sliders (1) in a contact position of said contact surface (24, 26).

2. Control interface (20) according to claim 1, **characterized in that** it comprises a microcontroller arranged to associate a value of a control parameter of said thermostat (10) with said contact position in order to adjust said parameter as a function of the position of said slider (1).

3. Control interface (20) according to claim 1 or 2, **characterized in that** said contact surface (24, 26) is a substantially flat surface and said guide means (2) are arranged to guide said slider (1) parallel to said contact surface (24, 26).

4. Control interface (20) according to any of the preceding claims, **characterized in that** said guide means (2) are arranged to guide said slider (1) so that it slides on said contact surface (24, 26)

5. Control interface (20) according to any of the preceding claims, **characterized in that** said guides means (2) are configured to guide said plurality of sliders substantially parallel to one another.

6. Control interface (20) according to any of the preceding claims, **characterized in that** it comprises resilient means (33) arranged to keep said slider (1) in contact with said contact surface (24, 26).

7. Control interface (20) according to any of the preceding claims, **characterized in that** it comprises a pointer (31) forming the end portion of the slider (1) placed in contact with the panel (22).

8. Control interface (20) according to claim 7, **characterized in that** said resilient means (33) are formed by the pointer (31).

9. Control interface (20) according to any of the preceding claims, **characterized in that** each pad (23) is joined to the other pads by means of a non-touch-sensitive connecting material.

10. Programmable thermostat (10) comprising a control interface (20) according to any of the preceding claims.

## Patentansprüche

1. Bedieneroberfläche (20) für einen programmierbaren Thermostat (10) mit:
einer Tafel (22) aus einem berührungssensitiven Material,
**dadurch gekennzeichnet, dass** die Bedieneroberfläche (20) mehrere bewegliche Stellschieber (1), Führungsmittel (2) für die Stellschieber (1) aufweist, und dass die Tafel (22) mehrere Kontaktfelder (23) aus berührungssensitiven Widerstandsmaterial aufweist, wobei jedes Feld (23) eine Kontaktfläche (24, 26) aufweist, die mit einem dazugehörenden Schieber (1) in Kontakt steht, jedes Feld (23) unabhängig von den anderen Feldern (23) ist und aus einem einzelnen Widerstandsblatt oder einer einzelnen Widerstandsmembran geformt ist, wobei die Führungsmittel (2) so angeordnet sind, dass sie die Schieber (1) in eine Kontaktposition auf der Kontaktfläche (24, 26) führen.

2. Bedieneroberfläche (20) nach Anspruch 1, **dadurch gekennzeichnet, dass** sie einen Mikrokontroller aufweist, der dafür ausgebildet ist, einen Wert eines Kontrollparameters des Thermostats (10) der Kontaktposition zuzuordnen, um diesen Parameter als eine Funktion der Position des Schiebers (1) einzustellen.

3. Bedieneroberfläche (20) nach Anspruch 1 oder 2, **dadurch gekennzeichnet, dass** die Kontaktfläche (24,26) eine im wesentlichen flache Oberfläche ist und die Führungsmittel (2) so angeordnet sind, dass sie den Schieber (1) parallel zu dieser Kontaktfläche (24, 26) führen.

4. Bedieneroberfläche (20) nach einem der vorstehenden Ansprüche, **dadurch gekennzeichnet, dass** die Führungsmittel (2) dafür ausgebildet sind, den Schieber (1) so zu führen, dass er auf der Kontaktfläche (24, 26) gleitet.

5. Bedieneroberfläche (20) nach einem der vorstehenden Ansprüche, **dadurch gekennzeichnet, dass** die Führungsmittel (2) dafür ausgebildet sind, die Schieber im Wesentlichen parallel zueinander zu führen.

6. Bedieneroberfläche (20) nach einem der vorstehenden Ansprüche, **dadurch gekennzeichnet, dass** sie federnde Mittel (33) aufweist, die dafür ausgebildet sind, den Schieber (1) in Kontakt mit der Kontaktfläche (24, 26) zu halten.

7. Bedieneroberfläche (20) nach einem der vorstehenden Ansprüche, **dadurch gekennzeichnet, dass** sie einen Zeiger (31) aufweist, der den Endabschnitt des Schiebers (1) bildet, der mit dem Feld (22) in Kontakt ist.

8. Bedieneroberfläche (20) nach Anspruch 7, **dadurch gekennzeichnet, dass** die federnden Mittel (33) von dem Zeiger (31) gebildet werden.

9. Bedieneroberfläche (20) nach einem der vorstehenden Ansprüche, **dadurch gekennzeichnet, dass** jedes Feld (23) mit den anderen Feldern mittels eines nicht-berührungssensitiven Verbindungsmaterials verbunden ist.

10. Programmierbarer Thermostat (10) mit einer Bedieneroberfläche (20) nach einem der vorstehenden Ansprüche.

## Revendications

1. Interface de commande (20) destinée à un thermostat programmable (10), comportant :
- un panneau (22) constitué d'un matériau à sensibilité tactile ;
**caractérisée en ce que** ladite interface de commande (20) comprend une pluralité de curseurs de réglage mobiles (1), des moyens de guidage (2) pour lesdits curseurs (1), et **en ce que** ledit panneau (22) comprend une pluralité de plots de contact (23) constitués d'un matériau résistif à sensibilité tactile, chaque plot (23) ayant une surface de contact (24, 26) en contact avec un curseur correspondant (1), chaque plot (23) étant indépendant des autres plots (23) et étant formé à partir d'un film ou membrane résistif(ve) unique, lesdits moyens de guidage (2) étant agencés pour guider ladite pluralité de curseurs (1) dans une position de contact avec ladite surface de contact (24, 26).

2. Interface de commande (20) selon la revendication 1, **caractérisée en ce qu'**elle comprend un microcontrôleur agencé pour associer une valeur d'un paramètre de commande dudit thermostat (10) à ladite position de contact afin d'ajuster ledit paramètre en fonction de la position dudit curseur (1).

3. Interface de commande (20) selon la revendication 1 ou 2, **caractérisée en ce que** ladite surface de contact (24, 26) est une surface essentiellement plane et **en ce que** lesdits moyens de guidage (2) sont agencés pour guider ledit curseur (1) parallèlement à ladite surface de contact (24, 26).

4. Interface de commande (20) selon 1"une quelconque des revendications précédentes, **caractérisée en ce que** lesdits moyens de guidage (2) sont agencés pour guider ledit curseur (1) de sorte qu'il coulisse sur ladite surface de contact (24, 26).

5. Interface de commande (20) selon 1"une quelconque des revendications précédentes, **caractérisée en ce que** lesdits moyens de guidage (2) sont configurés pour guider ladite pluralité de curseurs de façon essentiellement parallèle l'un à l'autre.

6. Interface de commande (20) selon 1"une quelconque des revendications précédentes, **caractérisée en ce qu'**elle comporte des moyens élastiques (33) agencés pour maintenir ledit curseur (1) en contact avec ladite surface de contact (24, 26).

7. Interface de commande (20) selon l'une quelconque des revendications précédentes, **caractérisée en ce qu'**elle comprend un pointeur (31) formant la partie d'extrémité du curseur (1) placée en contact avec le panneau (22).

8. Interface de commande (20) selon la revendication 7, **caractérisée en ce que** lesdits moyens élastiques (33) sont formés par le pointeur (31).

9. Interface de commande (20) selon l'une quelconque des revendications précédentes, **caractérisée en ce que** chaque plot de contact (23) est relié aux autres plots de contact au moyen d'un matériau de raccordement qui n'est pas à sensibilité tactile.

10. Thermostat programmable (10) comprenant une interface de commande (20) selon l'une quelconque des revendications précédentes.
